# EUROPEAN PATENT APPLICATION

(11) **EP 4 589 180 A1**
(43) Date of publication of application: **23.07.2025**
(21) Application number: 24838621.1
(22) Date of filing: 28.06.2024
(51) Int. Cl.: F16K 1/36, F16K 1/32, F16K 27/02, F16K 41/02

(54) **VALVE OPENING AND CLOSING MEMBER AND STRAIGHT-THROUGH STOP VALVE**

(30) Priority: 13.07.2023 CN 202310857048
(71) Applicant: Oushangyuan Process & Equipment Intelligent Co., Tianjin 300350 (CN)
(72) Inventor: ZHANG, Tianti, Tianjin 300350 (CN); TANG, Haijing, Tianjin 300350 (CN); MA, Shufang, Tianjin 300350 (CN)
(74) Representative: Biallo, Dario
(86) International application number: PCT/CN2024/102525
(87) International publication number: WO 2025/011366

(57) **Abstract**

Provided are a valve opening and closing member and a straight-through globe valve. The valve opening and closing member includes a valve core sealing gasket, a valve core sealing gasket securing ring, and a valve flap. The valve core sealing gasket and the valve core sealing gasket securing ring are sequentially arranged on a side of the valve flap, and the valve core sealing gasket securing ring is configured to secure the valve core sealing gasket to the valve flap. The valve flap includes a valve flap body and an external threaded column coaxially arranged below the valve flap body; an internal threaded hole arranged on the valve core sealing gasket securing ring and threadedly connected to the external threaded column; and a sealing structure arranged on a side of the external threaded column facing away from the valve flap body and configured to prevent a medium from entering a clearance between the external threaded column and the internal threaded hole.

## Description

This application claims priority to Chinese Patent Application No. 202310857048.3 filed with the China National Intellectual Property Administration (CNIPA) on Jul. 13, 2023, the disclosure of which is incorporated herein by reference in its entirety.

### TECHNICAL FIELD

The present application relates to the technical field of straight-through globe valves, for example, a valve opening and closing member and a straight-through globe valve.

### BACKGROUND

A straight-through globe valve relies on the pressure applied to a valve stem to tightly combine the sealing surface of a valve flap with the sealing surface of a valve seat to prevent the flow of a medium. Due to the characteristics of small friction between sealing surfaces, wear resistance, small opening height, and good manufacturing technique performance during opening and closing, the straight-through globe valve is widely used in the industrial sector. In particular, the valve is suitable for use in the sanitary and aseptic techniques, such as the antibiotic production process.

When being applied in the antibiotic production process, the straight-through globe valve should have an internal chamber with low roughness, low dead angle, and no liquid accumulation, so that the valve can be suitable for clean-in-place (CIP) and sanitize-in-place (SIP). Further, in the straight-through globe valve, the valve flap is connected to metal parts through a threaded connection or a rivet connection to secure a valve core sealing gasket, however, clearances between threaded pairs or radial clearances after the rivet connection are dead angles. A medium passing through the globe valve cannot flow out after flowing into these clearances, resulting in liquid accumulation within the valve body and difficulty in cleaning, thereby affecting the sanitary and aseptic environment in the antibiotic production process.

### SUMMARY

The present application provides a valve opening and closing member and a straight-through globe valve, which can solve the problem that a medium cannot flow out a dead angle after flowing into the dead angle, where the dead angle is present when a valve flap of the straight-through globe valve is connected to a metal part to secure a valve core sealing gasket.

An embodiment of the present application provides a valve opening and closing member. The valve opening and closing member includes a valve core sealing gasket, a valve core sealing gasket securing ring, and a valve flap. The valve core sealing gasket and the valve core sealing gasket securing ring are sequentially arranged on a side of the valve flap, and the valve core sealing gasket securing ring is configured to secure the valve core sealing gasket to the valve flap.

The valve flap includes a valve flap body and an external threaded column coaxially arranged below the valve flap body; an internal threaded hole arranged on the valve core sealing gasket securing ring and threadedly connected to the external threaded column; and a sealing structure arranged on a side of the external threaded column facing away from the valve flap body and configured to prevent a medium from entering a clearance between the external threaded column and the internal threaded hole.

In an embodiment, the sealing structure includes a cylinder which is configured to be in interference fit with a cylindrical hole arranged below the internal threaded hole.

In an embodiment, the cylinder and the external threaded column are formed integrally.

In an embodiment, the internal threaded hole is configured as a blind hole to seal an end of the internal threaded hole.

An embodiment of the present application further provides a straight-through globe valve. The straight-through globe valve includes a valve body. Two chambers communicating with an exterior are arranged within the valve body, branches are arranged within the two chambers, a communication joint between the two chambers is provided with a globe chamber, a communication joint between the globe chamber and one of the two chambers is provided with a valve port, a valve shaft extending to an exterior of the valve body is configured to pass through and be slidably connected within the globe chamber, and an end of the valve shaft located within the valve body is securely connected to the valve flap body.

In an embodiment, a peripheral side of the valve port is provided with an annular inclined runner, and the annular inclined runner is configured to communicate with the globe chamber; whenever the valve flap body closes or opens the valve port, the one of the two chambers is configured to still stay in communication with the globe chamber and communicate with the annular inclined runner; the branches are configured to enable a medium to flow into or out of the chambers, and an internal bottom of the annular inclined runner is inclined towards a side from high to low.

In an embodiment, communication joints between the two chambers and the exterior of the valve body are connected to external pipelines by welding respectively.

In an embodiment, communication joints between the two chambers and the exterior of the valve body are connected to external pipelines by sanitary flanges respectively, and the sanitary flanges are configured to seal connection joints between the valve body and the external pipelines through concave-convex surfaces and O-shaped sealing rings respectively.

In an embodiment, the valve body is provided with an opening communicating with the globe chamber, the opening is sealably connected to a valve cover by a sealing gasket, the valve cover is provided with a valve neck communicating with an interior of the globe chamber, and the valve shaft is slidably and sealably connected within the valve neck.

In an embodiment, sealing between the valve shaft and the valve neck is performed by a combination filler.

### BRIEF DESCRIPTION OF DRAWINGS

FIG. 1 is a side sectional view of a sealing structure according to an embodiment of the present application.
FIG. 2 is a side sectional view of a straight-through globe valve according to an embodiment of the present application.
FIG. 3 is a second side sectional view of a sealing structure according to an embodiment of the present application.
FIG. 4 is a side sectional view when a valve core sealing gasket securing ring is not mounted according to an embodiment of the present application.
FIG. 5 is a top view of an annular inclined runner according to an embodiment of the present application.
FIG. 6 is a perspective side sectional view of a straight-through globe valve according to an embodiment of the present application.
FIG. 7 is a perspective view of a straight-through globe valve according to an embodiment of the present application.
FIG. 8 is a view of the flow state of a medium when a straight-through globe valve is opened according to an embodiment of the present application.

### Reference list

- 1: valve body
- 2: valve neck
- 3: valve cover
- 4: valve shaft
- 5: valve core sealing gasket
- 6: valve core sealing gasket securing ring
- 7: valve flap
- 8: chamber
- 9: globe chamber
- 10: annular inclined runner
- 11: branch
- 701: valve flap body
- 702: external threaded column
- 703: cylinder
- 704: internal threaded hole
- 705: cylindrical hole

### DETAILED DESCRIPTION

### Embodiment one

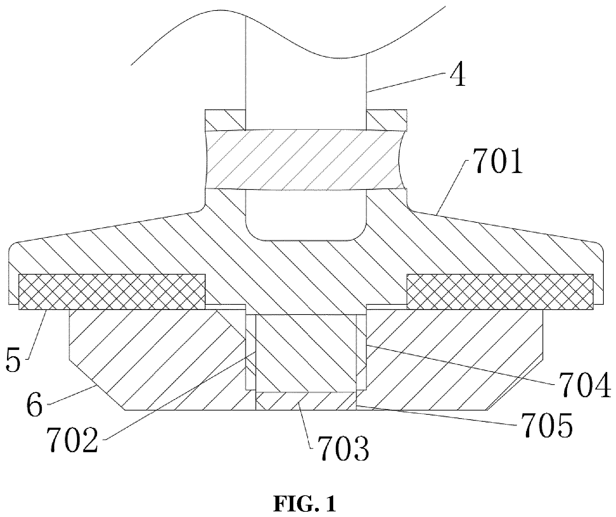

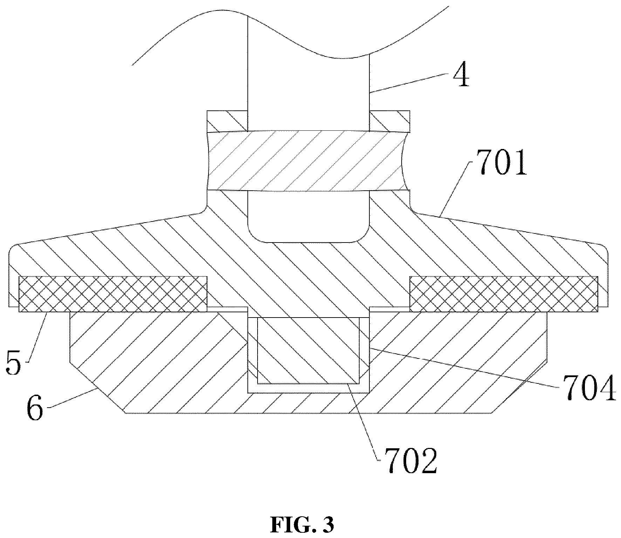

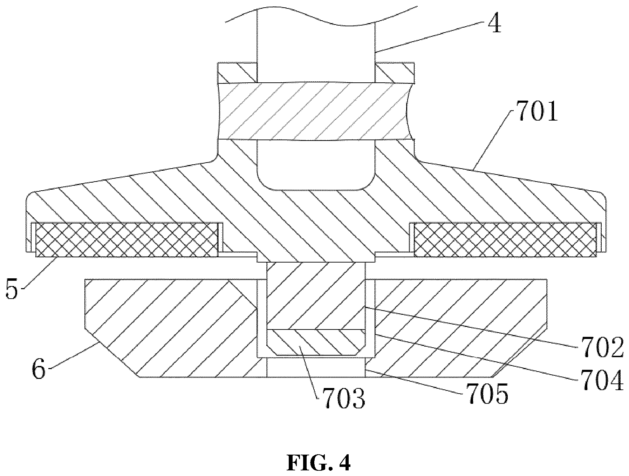

As shown in FIGS. 1, 3, and 4, an embodiment of the present application provides a valve opening and closing member. The valve opening and closing member includes a valve core sealing gasket 5, a valve core sealing gasket securing ring 6, and a valve flap 7. The valve core sealing gasket 5 and the valve core sealing gasket securing ring 6 are sequentially arranged on a side of the valve flap 7, and the valve core sealing gasket securing ring 6 is configured to secure the valve core sealing gasket 5 to the valve flap 7.

The valve flap 7 includes a valve flap body 701 and an external threaded column 702 coaxially arranged below the valve flap body 701; an internal threaded hole 704 arranged on the valve core sealing gasket securing ring 6 and threadedly connected to the external threaded column 702; and a sealing structure arranged on a side of the external threaded column 702 facing away from the valve flap body 701 and configured to prevent a medium from entering a clearance between the external threaded column 702 and the internal threaded hole 704.In this embodiment, the valve opening and closing member is specifically applied to a globe valve such as a straight-through globe valve, and the valve is opened or closed by a linear motion of the valve flap 7 within the globe valve.

The straight-through globe valve is one of the important components in the antibiotic production technique process. Moreover, low roughness, low dead angle, and no liquid accumulation are required within the valve according to the requirements of the antibiotic production technique in actual applications. In the present application, the external threaded column 702 is threadedly connected to the internal threaded hole 704 to secure the valve core sealing gasket securing ring 6 to the valve flap body 701, thereby clamping and securing the valve core sealing gasket 5 between the valve flap body 701 and the valve core sealing gasket securing ring 6, and the sealing structure seals an end portion of the internal threaded hole 704, thereby preventing the medium flowing in the valve from entering the clearance between the internal threaded hole 704 and the external threaded column 702.

The sealing structure is configured to prevent the medium from flowing into the clearance at a connection joint between the internal threaded hole 704 and the external threaded column 702, thereby avoiding the generation of liquid accumulation within the external threaded column 702 and the internal threaded hole 704, reducing the difficulty in sterilizing and cleaning the interior of the valve, and ensuring the sanitary and aseptic environment in the production process.

In the present application, the external threaded column 702 is connected to the internal threaded hole 704 to secure the valve core sealing gasket securing ring 6 so that the valve core sealing gasket 5 can abut against the valve flap 7, thereby playing a sealing and securing role. Moreover, in the present application, the sealing structure prevents the medium from flowing into the clearance between the external threaded column 702 and the internal threaded hole 704, thereby avoiding the generation of liquid accumulation within a valve body 1 and ensuring the sanitary and aseptic technique in the production process.

Moreover, since the valve core sealing gasket 5 and the valve core sealing gasket securing ring 6 abut against each other to form the sealing, the medium flowing in the valve is also prevented from flowing from a side of the internal threaded hole 704 adjacent to the valve core sealing gasket 5 into the clearance between the external threaded column 702 and the internal threaded hole 704, thereby avoiding liquid accumulation in metal parts securing the valve core sealing gasket 5 in the valve and ensuring the sanitary and aseptic environment within the valve in the antibiotic production process.

In this embodiment, the valve core sealing gasket 5 is configured to seal a channel for the medium to flow in the valve under the drive of the valve flap body 701, the valve core sealing gasket securing ring 6 is secured to the valve flap body 701, and the valve core sealing gasket securing ring 6 and the valve flap body 701 on two sides of the valve core sealing gasket 5 clamp and secure the valve core sealing gasket 5.

In this embodiment, the valve opening and closing member may also be applied to other mechanical components having the valve flap 7 so that these mechanical components can obstruct and seal the flowing medium, thereby preventing the medium from eroding the interiors of corresponding regions and preventing the aseptic technique from being affected by the accumulated medium.

The sealing structure includes a cylinder 703. The valve core sealing gasket securing ring 6 is further provided with a cylindrical hole 705. The cylindrical hole 705 is located below the internal threaded hole 704. The cylinder 703 is in an interference fit with the cylindrical hole 705, thereby preventing the connection between the valve core sealing gasket securing ring 6 and the valve flap 7 from loosening.

Since the surfaces of the cylinder 703 and the cylindrical hole 705 are smooth, the interference fit between the cylinder 703 and the cylindrical hole 705 achieves the mechanical sealing effect, thereby preventing the medium flowing in the valve from entering the clearance between the external threaded column 702 and the internal threaded hole 704, avoiding the generation of liquid accumulation caused by the medium in the valve flowing into the clearance between the external threaded column 702 and the internal threaded hole 704, reducing the difficulty in sterilizing and cleaning the interior of the valve, and ensuring the sanitary and aseptic environment in the production process.

Moreover, the cylinder 703 is in interference fit with the cylindrical hole 705, which limits the motion of the valve core sealing gasket securing ring 6, thereby preventing the connection between the external thread column 702 and the internal thread hole 704 from loosening.

That is, in this embodiment, the main technical feature lies in the sequential arrangement of the external threaded column 702 and the cylinder 703. The interference fit between the cylinder 703 and the cylindrical hole 705 mechanically seals the cylindrical hole 705, and the abutment between the valve core sealing gasket 5 and the valve core sealing gasket securing ring 6 seals the other side of the internal threaded hole 704, thereby preventing the medium passing through the valve from flowing into the clearance between the external threaded column 702 and the internal threaded hole 704, avoiding the generation of liquid accumulation within the external threaded column 702 and the internal threaded hole 704, reducing the difficulty in sterilizing and cleaning the interior of the valve, and ensuring the sanitary and aseptic environment in the production process.

In this embodiment, the external threaded column 702 and the cylinder 703 may be formed integrally, or may also be separately formed and then concentrically connected by welding or in other manners, as long as the external threaded column 702 and the internal threaded hole 704 can be ensured to threadedly engage with each other, and the cylinder 703 can be ensured to be in interference fit with the cylindrical hole 705 to achieve the mechanical sealing effect. Second, the external threaded column 702 and the valve flap body 701 may also be formed integrally or may be concentrically connected by welding or in other manners.

In an embodiment, the sealing structure may also be an annular sealing ring arranged at an end portion of the external threaded column 702 and a cylindrical hole 705 arranged in the same manner. The annular sealing ring is arranged at the end portion of the external threaded column 702 to slidably contact the inner wall of the cylindrical hole 705 so that a sealing effect can be generated to prevent the medium from flowing into the clearance between the internal threaded hole 704 and the external threaded column 702. However, compared with the interference fit between the cylinder 703 and the cylindrical hole 705 in this embodiment, this technical means lacks the effect of preventing the connection between the external threaded column 702 and the internal threaded hole 704 from loosening. The preceding two technical means in this embodiment have better effects.

The cylinder 703 and the external threaded column 702 are formed integrally so that the overall production technique can be more convenient, and the overall structure can be more stable.

The internal threaded hole 704 is configured as a blind hole to seal an end of the internal threaded hole 704, which also prevents the medium flowing within the valve body 1 from entering the clearance between the external threaded column 702 and the internal threaded hole 704, avoids the generation of liquid accumulation within the valve body 1, and ensures the sanitary and aseptic technique in the production process.

When the internal threaded hole 704 is configured as a blind hole, one end of the internal threaded hole 704 facing the valve flap body 701 is in a communicated state, and the other end of the internal threaded hole 704 facing away from the valve flap body 701 is in a closed state so that the medium flowing within the valve cannot enter the internal threaded hole 704 from the other end of the internal threaded hole 704, thereby forming a sealing effect on the other end of the internal threaded hole 704 and further avoiding the generation of liquid accumulation in the clearance at the connection joint between the internal threaded hole 704 and the external threaded column 702.

Moreover, to ensure that the valve core sealing gasket 5 can be secured to a side of the valve flap body 701 through the valve core sealing gasket securing ring 6, the length of the external threaded column 702 should be less than the depth of the internal threaded hole 704, thereby ensuring that the valve core sealing gasket securing ring 6 and the valve flap body 701 can abut against the valve core sealing gasket 5 separately.

### Embodiment two

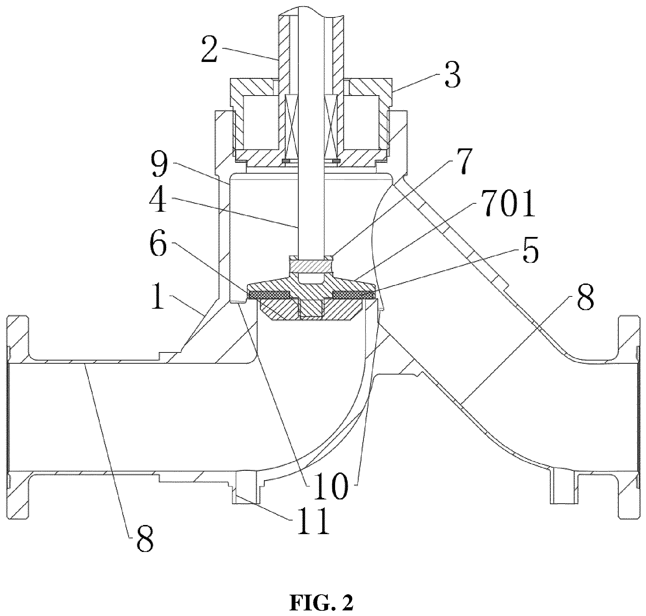

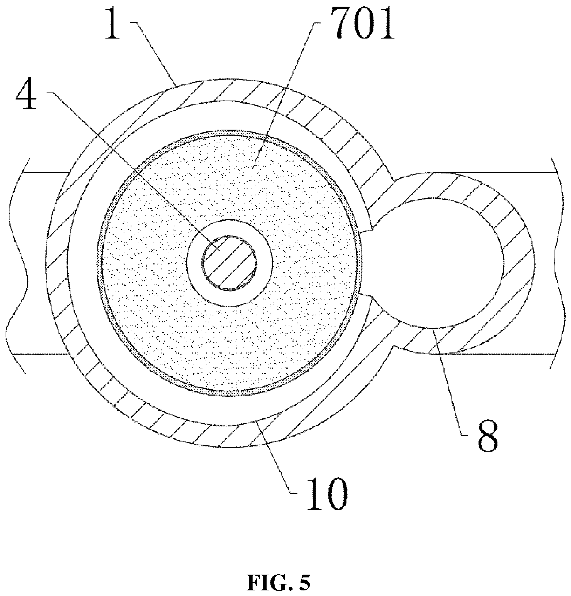

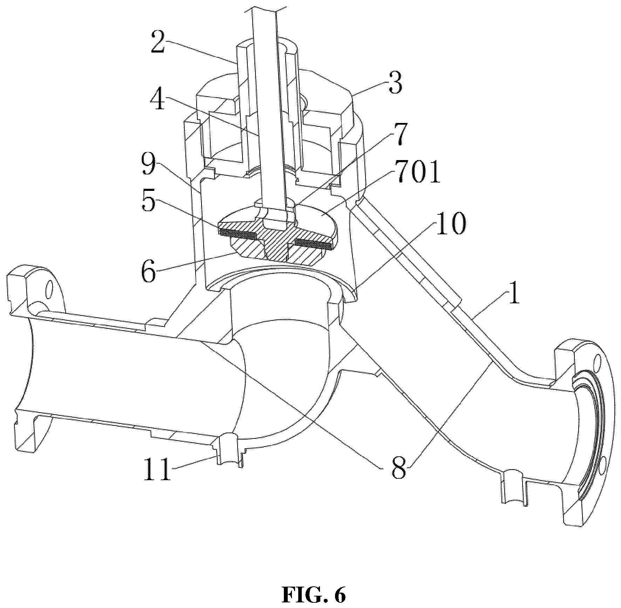

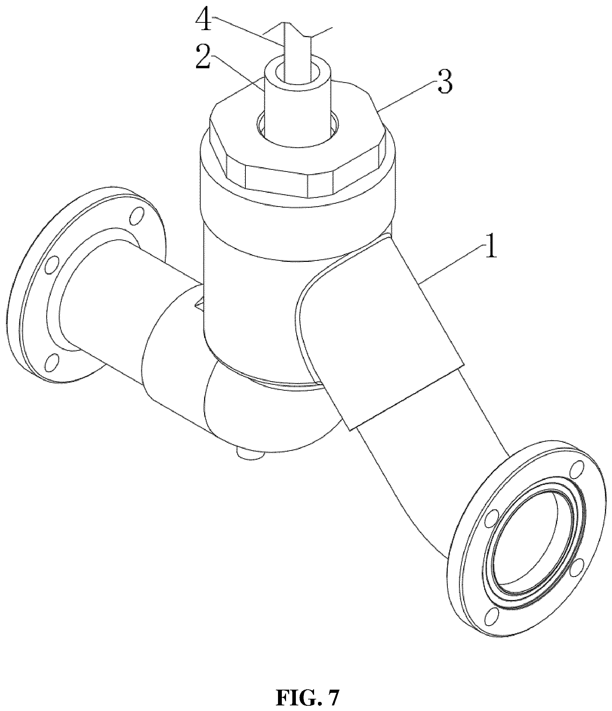

As shown in FIGS. 2 and 5 to 8, an embodiment of the present application further provides a straight-through globe valve. The straight-through globe valve includes a valve body 1. Two chambers 8 communicating with the exterior are arranged within the valve body 1. Branches 11 are arranged within the two chambers 8. A communication joint between the two chambers 8 is provided with a globe chamber 9. A communication joint between the globe chamber 9 and one of the two chambers 8 is provided with a valve port. A valve shaft 4 extending to the exterior of the valve body 1 passes through and is slidably connected within the globe chamber 9. An end of the valve shaft 4 located within the valve body 1 is securely connected to the valve flap body 701.

In the actual use of antibiotic production in the present application, communication joints between the two chambers 8 and the exterior of the valve body 1 are connected to external pipelines respectively, and the valve shaft 4 is connected to an actuator that includes an electric type, a pneumatic type, or a manual type.

When the channel within the valve body 1 is required to be opened, the actuator drives the valve shaft 4 to move upward; the valve flap 7, the valve core sealing gasket 5, and the valve core sealing gasket securing ring 6 synchronously move with the valve shaft 4; and the valve core sealing gasket 5 disengages from the valve port at the communication joint between the globe chamber 9 and the one of the two chambers 8 so that the globe chamber 9 can communicate with both the two chambers 8. In this case, the interior of the valve body 1 is in a state where the medium can flow.

When the channel for the medium to flow within the valve body 1 is required to be closed, the actuator drives the valve shaft 4 to move downward so that the valve flap 7, the valve core sealing gasket 5, and the valve core sealing gasket securing ring 6 can synchronously move with the valve shaft 4, and the valve core sealing gasket 5 can move to abut against the outer wall of the valve port to form the sealing, thereby stopping the medium from flowing within the valve body 1 and thus enabling the flow and shutoff of the medium within the valve body 1.

In the present application, the valve shaft 4 drives the valve flap 7 and the valve core sealing gasket 5 to move up and down so that the valve core sealing gasket 5 can stay away from or be pressed against the communication joint between the one of the two chambers 8 and the globe chamber 9, thereby opening or closing the interior of the valve body 1.

The valve flap 7 is applied in this embodiment so that when this embodiment is actually used, the presence of dead angles within the straight-through globe valve can be reduced, and the presence of liquid accumulation at the valve flap 7 within the straight-through globe valve can be avoided, thereby reducing the difficulty in sterilizing and cleaning the straight-through globe valve.

Since straight-through globe valves are also applied in industries such as food, medicine, and chemicals, the straight-through globe valve provided in this application can also be applied in these industries, and the use of the straight-through globe valve is required to comply with the specific use requirements.

A peripheral side of the valve port is provided with an annular inclined runner 10, and the annular inclined runner 10 communicates with the globe chamber 9. Whenever the valve flap body 701 closes or opens the valve port, the one of the two chambers 8 still stays in communication with the globe chamber 9 and communicates with the annular inclined runner 10. Branches are arranged within the two chambers, and a medium may flow into or out of the chamber through branches arranged within the chamber, and the internal bottom of the annular inclined runner 10 is inclined towards a side from high to low.

In the related art, the interior of the straight-through globe valve is also provided with an annular runner that is also arranged on the peripheral side of the valve port, but the internal bottom of the annular runner is horizontal, that is, after the valve body 1 is installed, the valve shaft 4 is in a vertical state, and the internal bottom of the annular runner is a horizontal plane.

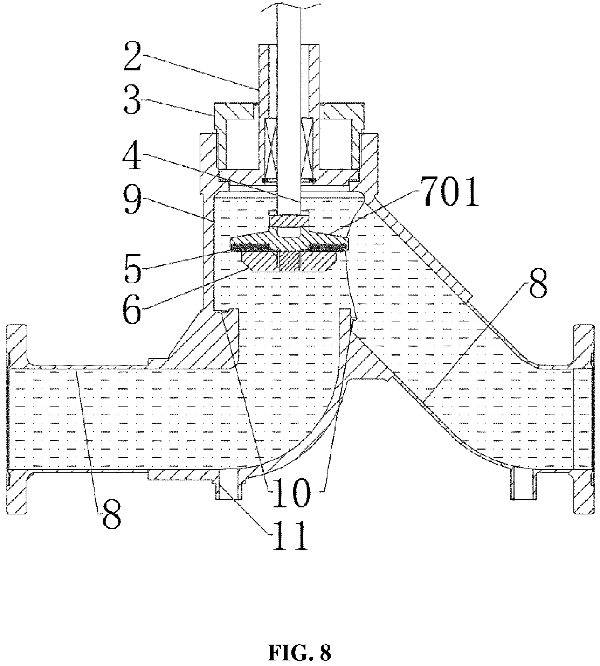

In the present application, as shown in FIGS. 2 and 8, the globe chamber 9 keeps communicating with a right chamber 8 as shown in the figures, a left chamber 8 as shown in the figures does not communicate with the globe chamber 9 when the valve port is closed by the valve flap 7, and the annular inclined runner 10 keeps communicating with the right chamber 8 as shown in the figures.

In FIGS. 2 and 8, the straight-through globe valve in the present application is in a state where the valve port is closed and a state where the valve port is opened respectively. When the valve port is in the opened state as shown in FIG. 8 in the present application, the medium fills the interior of the valve body 1 and flows through the two chambers 8 and the globe chamber 9 through the valve body 1. In this case, the medium also fills the annular inclined runner 10 located on the peripheral side of the valve port.

When the valve port is in the closed state as shown in FIG. 2 in the present application, the medium flows out from the interior of the valve body 1, and the medium within the annular inclined runner 10 flows into a chamber 8 communicating with the annular inclined runner 10, that is, flows into the right chamber 8 of FIG. 2. Since the internal bottom of the annular inclined runner 10 is inclined towards the side from high to low, the medium falling into the annular inclined runner 10 flows along the internal bottom of the annular inclined runner 10 under the action of gravity, enters the left chamber 8 through a communication joint between the annular inclined runner 10 and the left chamber 8, and then is discharged through the branch 11 within the left chamber 8, thereby avoiding liquid accumulation in the annular inclined runner 10, further lowering the possibility of liquid accumulation in the valve body 1, and ensuring the sanitary and aseptic environment within the valve body 1 in the antibiotic production process. Moreover, condensed water and others within the two chambers 8 may also flow out of the two chambers 8 through the branches 11 respectively.

Second, when the two chambers 8 and the globe chamber 9 are required to be disinfected and sterilized, a medium required for disinfection and sterilization, such as water vapor, may enter the two chambers 8 through the positions where the two chambers 8 communicate with the exterior and through the branches 11 respectively.
The communication joints between the two chambers 8 and the exterior of the valve body 1 are connected to the external pipelines by welding respectively.

In the related art, the communication joints between the exterior of the valve body 1 of the straight-through globe valve and the two chambers 8 of the straight-through globe valve are generally connected by common flanges and are sealed by flat sealing gaskets. Since the flat sealing gaskets cannot perform accurate positioning, and the sealing surfaces of the common flanges are relatively rough, liquid accumulation is present between the flanges after the connection. In the present application, the connection to the external pipelines by welding may eliminate the docking problems of dead angles and sealing and avoid the presence of liquid accumulation.

The communication joints between the two chambers 8 and the exterior of the valve body 1 are further connected to the external pipelines through sanitary flanges respectively. The sanitary flanges seal connection joints between the valve body 1 and the external pipelines through concave-convex surfaces and O-shaped sealing rings respectively.

As can be seen from the preceding, in the related art, the communication joints between the exterior of the valve body 1 of the straight-through globe valve and the two chambers 8 of the straight-through globe valve are generally connected by the common flanges and are sealed by the flat sealing gaskets. Since the flat sealing gaskets cannot perform the accurate positioning, and the sealing surfaces of the common flanges are relatively rough, the liquid accumulation is present between the flanges after the connection. Therefore, the connection by the sanitary flanges and the sealing performed by the O-shaped sealing rings may greatly reduce dead angles generated after the connection and dead angles between the sealing gaskets after the connection.

The valve body 1 is provided with an opening communicating with the globe chamber 9. The opening is sealably connected to a valve cover 3 through a sealing gasket. The valve cover 3 is provided with a valve neck 2 communicating with the interior of the globe chamber 9. The valve shaft 4 is slidably and sealably connected within the valve neck 2.

The opening on the valve body 1 is sealed by the valve cover 3 and the sealing gasket to facilitate the motion of the valve shaft 4 and prevent the outflow of the medium, thereby ensuring good sealing within the valve body 1.

The sealing between the valve shaft 4 and the valve neck 2 is performed by a combination filler, which ensures good sealing of the valve shaft 4 during the up and down motion and prevents the medium from flowing out of the valve body 1 through a clearance between the valve shaft 4 and the valve neck 2.

## Claims

1. A valve opening and closing member, comprising a valve core sealing gasket (5), a valve core sealing gasket securing ring (6), and a valve flap (7),
wherein the valve core sealing gasket (5) and the valve core sealing gasket securing ring (6) are sequentially arranged on a side of the valve flap (7), and the valve core sealing gasket securing ring (6) is configured to secure the valve core sealing gasket (5) to the valve flap (7); and
wherein the valve flap (7) comprises:
a valve flap body (701) and an external threaded column (702) coaxially arranged below the valve flap body (701);
an internal threaded hole (704) arranged on the valve core sealing gasket securing ring (6) and threadedly connected to the external threaded column (702); and
a sealing structure arranged on a side of the external threaded column (702) facing away from the valve flap body (701) and configured to prevent a medium from entering a clearance between the external threaded column (702) and the internal threaded hole (704).

2. The valve opening and closing member of claim 1, wherein the sealing structure comprises a cylinder (703) which is configured to be in interference fit with a cylindrical hole (705) arranged below the internal threaded hole (704).

3. The valve opening and closing member of claim 2, wherein the cylinder (703) and the external threaded column (702) are formed integrally.

4. The valve opening and closing member of claim 1, wherein the internal threaded hole (704) is configured as a blind hole to seal an end of the internal threaded hole (704).

5. A straight-through globe valve comprising: the valve opening and closing member of any one of claims 1 to 4 and a valve body (1),
wherein two chambers (8) communicating with an exterior are arranged within the valve body (1), branches (11) are arranged within the two chambers (8), a communication joint between the two chambers (8) is provided with a globe chamber (9), a communication joint between the globe chamber (9) and one of the two chambers (8) is provided with a valve port, a valve shaft (4) extending to an exterior of the valve body (1) is configured to pass through and be slidably connected within the globe chamber (9), and an end of the valve shaft (4) located within the valve body (1) is securely connected to the valve flap body (701).

6. The straight-through globe valve of claim 5, wherein a peripheral side of the valve port is provided with an annular inclined runner (10), and the annular inclined runner (10) is configured to communicate with the globe chamber (9); whenever the valve flap body (701) closes or opens the valve port, the one of the two chambers (8) is configured to still stay in communication with the globe chamber (9) and communicate with the annular inclined runner (10); the branches (11) are configured to enable a medium to flow into or out of the two chambers (8), and an internal bottom of the annular inclined runner (10) is inclined towards a side from high to low.

7. The straight-through globe valve of claim 5, wherein communication joints between the two chambers (8) and the exterior of the valve body (1) are connected to external pipelines by welding respectively.

8. The straight-through globe valve of claim 5, wherein communication joints between the two chambers (8) and the exterior of the valve body (1) are connected to external pipelines by sanitary flanges respectively, and the sanitary flanges are configured to seal connection joints between the valve body (1) and the external pipelines through concave-convex surfaces and O-shaped sealing rings respectively.

9. The straight-through globe valve of claim 5, wherein the valve body (1) is provided with an opening communicating with the globe chamber (9), the opening is sealably connected to a valve cover (3) by a sealing gasket, the valve cover (3) is provided with a valve neck (2) communicating with an interior of the globe chamber (9), and the valve shaft (4) is slidably and sealably connected within the valve neck (2).

10. The straight-through globe valve of claim 9, wherein sealing between the valve shaft (4) and the valve neck (2) is performed by a combination filler.
